(19) Europäisches Patentamt
European Patent Office
Office européen des brevets

(11) **EP 3 274 913 B1**

(12) **FASCICULE DE BREVET EUROPEEN**

(45) Date de publication et mention de la délivrance du brevet:
**28.06.2023  Bulletin 2023/26**

(21) Numéro de dépôt: **16714807.1**

(22) Date de dépôt: **24.03.2016**

(51) Classification Internationale des Brevets (IPC):
***G06V 40/19*** *(2022.01)*

(52) Classification Coopérative des Brevets (CPC):
**G06V 40/19; G06V 10/20**

(86) Numéro de dépôt international:
**PCT/EP2016/056494**

(87) Numéro de publication internationale:
**WO 2016/151071 (29.09.2016 Gazette 2016/39)**

(54) **DISPOSITIF ET PROCEDE POUR L'ACQUISITION BIOMETRIQUE DE L'IRIS**

VORRICHTUNG UND VERFAHREN ZUR BIOMETRISCHEN ERFASSUNG DER IRIS

DEVICE AND METHOD FOR BIOMETRIC ACQUISITION OF THE IRIS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.03.2015  FR 1500587**

(43) Date de publication de la demande:
**31.01.2018  Bulletin 2018/05**

(73) Titulaire: **IN-IDT**
**75016 Paris (FR)**

(72) Inventeurs:
• **LEMPÉRIÈRE, Nadège**
**78141 Velizy Cedex (FR)**
• **GOUDOU, Jean-François**
**91767 Palaiseau Cedex (FR)**
• **LOISEAUX, Brigitte**
**91767 Palaiseau Cedex (FR)**
• **CRÉMER, Sandra**
**78141 Velizy Cedex (FR)**
• **DELBOULBE-FORTAS, Anne**
**91767 Palaiseau Cedex (FR)**
• **FAGNO, Michael**
**91767 Palaiseau Cedex (FR)**
• **LEE BOUHOURS, Mane-Si-Laure**
**91767 Palaiseau Cedex (FR)**

(74) Mandataire: **Atout PI Laplace**
**Immeuble "Visium"**
**22, avenue Aristide Briand**
**94117 Arcueil Cedex (FR)**

(56) Documents cités:
**US-A1- 2007 247 725    US-A1- 2013 089 240**
**US-B2- 8 755 573**

• **Stan Z. Li: "Encyclopedia of Biometrics", 1 janvier 2009 (2009-01-01), Springer, XP002752511, vol. 2, page 1397-1407, le document en entier**
• **M.-A Burcklen ET AL: "Experimental demonstration of extended depth-of-field f /1.2 visible High Definition camera with jointly optimized phase mask and real-time digital processing", J OF THE EUROPEAN OPTICAL SOCIETY - RAPID PUBLICATIONS, 21 octobre 2015 (2015-10-21), pages 15046-1, XP055237678, DOI: 10.2971/jeos.2015.15046] Extrait de l'Internet: URL:http://www.jeos.org/index.php/jeos_rp/ article/view/15046 [extrait le 2015-12-18]**
• **Herbert Gross et al: "Handbook of Optical Systems, tome 2, Physical Image Formation", 1 janvier 2006 (2006-01-01), Wiley, XP002752512, vol. 2, pages 432, 434, 442-447, le document en entier**
• **Al Bovik: "The Essential Guide to Image Processing", 1 janvier 2009 (2009-01-01), Academic Press, XP002752513, pages 716-717, page 716, dernier alinéa page 717, dernier alinéa**
• **Thierry Fournel, Bahram Javidi: "Information Optics and Photonics", 1 janvier 2010 (2010-01-01), Springer, XP002752514, pages 236, 237, 243-245, le document en entier**

- David D. Zhang: "Automated Biometrics. Technologies and Systems", 1 janvier 2000 (2000-01-01), Kluwer, XP002752515, page 248, le document en entier
- Frédéric Diaz: "Systeme d'imagerie hybride par codage de pupille", , 6 mai 2011 (2011-05-06), XP055213287, Extrait de l'Internet: URL:http://tel.archives-ouvertes.fr/tel-00 624387/en/
- CHIR-WEEI CHANG ET AL: "Using liquid lens in wavefront coded imaging system", PROCEEDINGS OF SPIE, vol. 7061, 28 août 2008 (2008-08-28), pages 70610O-1, XP055238175, US ISSN: 0277-786X, DOI: 10.1117/12.794930 ISBN: 978-1-62841-730-2

**Description**

Le domaine de l'invention est celui des systèmes d'acquisition et de reconnaissance des données biométriques de l'iris. Elle est par exemple utilisée dans le domaine de contrôle d'accès, le contrôle automatique au niveau de l'embarquement de personnes au sein d'avions ou de trains, plus connu sous l'expression anglo-saxonne « Automatic Border Control Gate ABC-Gate). Elle peut aussi trouver sa place de manière plus générale dans le domaine du contrôle de la fraude, d'usurpation d'identité, etc.

La technique de capture et de reconnaissance des données propres de l'iris est une méthode d'identification biométrique qui utilise un algorithme de reconnaissance basé sur des images de l'iris ou des iris d'un individu. La biométrie iris offre une potentialité importante en termes d'identification, puisque sa précision lui permet d'adresser des bases de données de plusieurs milliards d'individus. Pour atteindre ces performances, l'acquisition des données biométriques de l'iris doit cependant répondre à des critères de qualité contraignants et exigeants :

- L'acquisition des données de l'iris doit se faire dans un domaine spectral spécifique (de préférence dans la bande proche infrarouge), là où les réflexions sur la cornée sont limitées. Il est donc nécessaire d'avoir un capteur actif, avec un éclairage suffisant pour éclairer l'iris là où il se trouve, mais répondant néanmoins aux normes de sécurité de l'œil;
- Le système optique doit assurer un grossissement permettant de positionner au minimum environ 160 pixels sur le diamètre de l'iris. De plus, la Fonction de Transfert de Modulation ou FTM, du système optique doit être suffisamment haute pour les fréquences spatiales significatives de l'Iris (typiquement > 20%). La fonction de Transfert de Modulation représente le contraste d'une mire constituée de lignes parallèles noires et blanches en fonction de la fréquence spatiale (en nombre de cycle par mm par exemple) des lignes de la mire. La FTM permet de quantifier la qualité en termes de contraste en fonction de la taille des détails. Plus la FTM, à une fréquence donnée, est élevée plus le détail sera contrasté et sera imagé avec netteté. Dans le cas contraire, le détail deviendra flou. Pour la reconnaissance d'iris, la FTM du système d'imagerie doit être suffisamment haute pour que les détails correspondant aux fréquences importantes et discriminantes pour la reconnaissance d'iris soient suffisamment contrastés, c'est-à-dire imagés de façon suffisamment nette.

Ces exigences sont aujourd'hui remplies par des capteurs dits « d'enrôlement ». Ces capteurs sont d'un coût résolument bas, de l'ordre de 500 à 1000 euros, et permettent d'obtenir des images d'iris d'une qualité suffisante pour constituer des bases de données de grande taille tout en assurant une précision de reconnaissance adéquate.

Cependant les contraintes du système optique limitent l'ergonomie du système :

- En effet pour obtenir des résultats exploitables, l'iris doit être positionné à une trentaine de centimètres du capteur pour obtenir les 160 pixels de diamètre habituellement requis, à l'heure actuelle,
- La profondeur de champ du système est souvent limitée et l'utilisateur doit se positionner dans une plage de distance de profondeur de deux ou trois cm.
- Dans ces systèmes, l'optique utilisée étant fixe, la plage des distances de capture pour lesquels l'image est nette sur le capteur est donc limitée à la profondeur de champ du système optique. Combinée au champ latéral et horizontal du système optique, la distance de capture définit un volume de capture, volume dans lequel il est possible de faire une image nette de l'objet. Il en découle que dans ce système une plage restreinte de distances de capture entraine un volume de capture faible. Il est donc nécessaire pour la capture d'iris avec de tels systèmes, que l'objet soit positionné de manière très précise dans le volume de capture réduit. Ceci peut être réalisé grâce à l'utilisation d'un guidage par un opérateur ou par une interface de guidage.

Par ailleurs, les interfaces d'aide au positionnement existantes sont par nature limitées. L'utilisateur ne doit pas détourner les yeux du capteur pendant l'acquisition. L'acquisition de l'iris peut donc durer jusqu'à plusieurs minutes, le temps que l'utilisateur trouve une position correcte. Ce type de capteur est donc adapté à des acquisitions guidées par un opérateur et pour lesquelles le temps d'acquisition n'est pas une contrainte, ou des cas d'utilisation de type « contrôle d'accès » où les utilisateurs utilisent fréquemment le capteur et peuvent ainsi se former dans le temps.

Dans le cas d'utilisation de type contrôle aux frontières en anglo-saxon « border control », les contraintes d'acquisition et de traitement des données sont beaucoup plus importantes. La capture de l'iris doit être réalisée lorsque l'individu est en déplacement. L'acquisition des données de l'iris doit être effectuée en quelques secondes et sans que le sujet, qui n'est pas formé et qui n'est pas aidé par un guide, ne manipule le capteur. De plus, les utilisateurs restent debout et, selon leur taille, il peut leur être difficile de se positionner avec précision à 30 cm du capteur si celui-ci est fixe, par exemple. De nombreux capteurs spécifiques à ces utilisations ont été conçus ces dernières années. Ils sont basés, entre autres, sur des optiques adaptatives issues du domaine spatial. Ces capteurs sont capables d'acquérir des données d'iris dans un volume de capture bien plus grand que les capteurs d'enrôlement ou de control d'accès pouvant aller jusqu'à 1 mètre de hauteur par 1,5 mètre de profondeur. Ils sont malheureusement onéreux, plusieurs dizaines de milliers d'euros, ce qui représente en général la moitié du coût d'une ABC-Gate.

L'art antérieur décrit différentes méthodes d'acquisition des données biométriques iris.

Le brevet US 8553948 divulgue un système et un procédé permettant d'augmenter le volume de capture en focalisant une caméra d'acquisition en différents points du volume de capture, puis en gardant l'image la plus nette. Ce processus est long et donc difficilement applicable à des volumes de capture larges comme il est utilisé dans le cas de contrôle de frontière.

La demande de brevet WO 2007/081122 et le brevet US 8755573 décrivent des systèmes qui sont basés sur une mesure préalable de la position 3D de la personne.

Le premier document utilise une caméra stéréoscopique pour mesurer la distance entre l'objet et la caméra de sorte à normaliser la taille de l'image de l'iris pour une meilleure reconnaissance d'iris et/ou pour guider la personne dans le volume de capture de la caméra stéréoscopique. Cependant le guidage de l'utilisateur entraine un temps d'acquisition d'une image nette plus long et est donc difficilement applicable à une ABC-Gate.

Le deuxième document utilise une caméra 'temps de vol' plus connue sous l'abréviation anglo-saxonne TOF pour Time-of-Flight, pour déterminer la position 3D de la personne et ce pour permettre de focaliser le système optique sur l'objet. Cette solution accélère l'acquisition des données de l'iris, mais la faible profondeur de champ du système optique nécessite une refocalisation du système à chaque déplacement de la personne qui de plus doit être suffisamment rapide.

Le temps nécessaire à la refocalisation lors du déplacement de la personne entraine une image qui a de fortes chances d'être floue. Pour pallier à ce problème, le document décrit un traitement numérique de « défloutage » pour rendre l'image plus nette. Ce traitement numérique est soit estimé et calculé en fonction de l'information de distance à partir d'un algorithme décrit dans l'invention au travers d'un algorithme exécuté entre la capture d'image et l'exécution de l'algorithme de reconnaissance de l'iris, soit calculé à partir de statistiques.

Dans le premier cas, il nécessite donc une étape supplémentaire et donc du temps de calcul qui ralentit l'accès à une image nette de l'iris. Donc pour des personnes en mouvement, ce système n'est pas idéal.

Dans les deux cas, il est bien connu qu'un défloutage correspond à un rehaussement de contraste. Les limites de telles techniques sont que lorsque le contraste est trop faible voire nul, il n'est pas possible de dé-flouter l'image. Les informations perdues ne peuvent pas être recrées. Cet effet apparaît notamment lorsque le déplacement de la personne est trop rapide par rapport au système de focalisation, et/ou compte tenu de la profondeur de champ autour de la distance de focalisation.

Notons également dans le brevet US8755573 que le système de localisation de la position 3D de l'objet possède une incertitude de mesure de l'ordre de quelques centimètres, ce qui implique que la focalisation peut être faite à une distance différente de la réelle distance de capture nécessaire pour obtenir une image nette. Cela entraine une image plus ou moins floue et plus ou moins « défloutable », qui est d'autant plus floue que la profondeur de champ est faible. Associée à un mouvement rapide de l'utilisateur, cette incertitude de mesure de la position 3D entraine la capture d'une image floue, qui a des chances d'être trop floue pour être dé-floutée, ce qui entraine la nécessité de recommencer la capture jusqu'à obtenir une image nette. Par rapport à la reconnaissance d'iris, cela induit donc un temps d'acquisition plus long avant la capture d'une image nette exploitable, ce qui est un désavantage pour une application en ABC-Gate.

Dans l'exemple cité dans le document, le système fonctionne sur la plage de distance de capture variant entre 1 m50 et 3m50, distances de captures considérées comme grandes. Dans ce cas particulier, la tolérance du système de localisation de la position 3D qui est de l'ordre de quelques cm est de l'ordre de grandeur de la profondeur de champ du système optique. Par contre lorsqu'on s'adresse à des distances de capture plus courtes, par exemple 30cm à 80cm, ce système n'est pas exploitable, car la profondeur de champ du système optique est réduite et devient inférieure à l'incertitude de mesure du système de localisation de la position 3D en profondeur de l'objet. Ceci entraine un pourcentage d'images floues élevé, entraînant la limitation de l'utilisation d'un tel système lorsqu'on veut adresser des volumes de capture correspondant à des distances de captures situées plus proches de la caméra d'acquisition.

D'autres méthodes utilisent des systèmes de suivi ou « tracking » complexes et coûteux à base de miroirs déformables ou orientables. Il en résulte des systèmes coûteux et peu faciles d'utilisation.

Malgré tous les avantages qu'elles présentent, les solutions décrites dans l'art antérieur ne permettent pas d'acquérir rapidement, de manière peu coûteuse et robuste aux déplacements du sujet, les données de l'iris d'un individu.

La technique de Northcott, exposé dans le document US2013089240, divulgue une technique d'acquisition de données biométriques du ou des iris d'un individu se trouvant à une certaine distance.

Dans la présente description, on utilisera indifféremment les expressions « noyau de déconvolution », « filtre de déconvolution », « filtre numérique » pour désigner un même élément.

Dans la présente description, on utilisera indifféremment les expressions « focalisation du système optique» ou « focus du système optique».

L'invention concerne un système d'acquisition de données biométriques du ou des iris d'un individu se trouvant à une distance de capture $d_{cap}$ comprise dans une plage de distances de capture appartenant à un ensemble de plages de distances prédéfinies, comportant au moins une première caméra adaptée à acquérir en continu un flux d'images et à déterminer la position 3D de l'œil de l'individu, au moins une deuxième caméra haute résolution, un moyen de positionnement composé d'au moins une caméra, une unité centrale adaptée à piloter la ou les caméras et le moyen de positionnement :

- Au moins la deuxième caméra haute résolution est asservie en fonction d'une première valeur de consigne C1 en position, la valeur C1 étant déterminée à partir de la position 3D de l'œil,
- La deuxième caméra haute résolution comporte au moins une lentille active, adaptée à effectuer une focalisation $f_0$ du système optique, la valeur $f_0$ est asservie en fonction d'une deuxième valeur C2 déterminée à partir de la distance de l'œil par rapport à la deuxième caméra, caractérisé en ce que la lentille active (121) est adaptée à effectuer des oscillations ou balayage permanents de la focalisation dans une plage autour de cette valeur de focalisation $f_0$, la longueur de la plage et le pas des oscillations permanentes dans cette plage sont asservies en fonction de cette deuxième valeur C2.

Selon un mode de réalisation, une troisième valeur C3 d'information distance de capture $d_{cap}$ est transmise à un module de traitement des données biométriques iris, ladite troisième valeur C3 d'information distance de capture $d_{cap}$ est transmise à un logiciel adapté à appliquer un filtre numérique afin de traiter le flux d'images capté par la deuxième caméra vidéo, ledit traitement sélectionnant dans une base de donnée de noyaux préalablement calculés, un noyau de déconvolution en fonction de la distance de l'œil et appliquant à l'image capturée un traitement de déconvolution avec ledit noyau, avant transmission de l'image résultante à un module de traitement des données biométriques iris.

Selon un autre mode de réalisation, s'ajoute à ce traitement d'image le fait que la deuxième caméra haute résolution comporte au moins un masque de phase adapté à augmenter la profondeur de champ de la deuxième caméra.

Le système peut comporter un module adapté à traiter le flux d'images vidéo issu de la caméra haute résolution et à le transmettre à un module de reconnaissance d'iris qui détermine la meilleure image d'iris.

Selon un mode de réalisation, la première caméra est asservie en position au moyen de la première valeur de consigne C1.

Selon une variante, le système comporte des moyens d'éclairage de l'individu composés de plusieurs LEDs à une ou plusieurs longueurs d'onde. Les moyens d'éclairage sont, par exemple adaptés à émettre dans le proche Infrarouge.

Les moyens de positionnement utilisés sont, par exemple, un système d'orientation de la direction de prise de vue de type pan-tilt.

Selon une variante de réalisation le filtre de phase est un masque binaire annulaire, avec des sauts de phase égaux à des multiples de $\pi$.

Selon une variante de réalisation le filtre de phase est un masque binaire annulaire, avec des sauts de phase égaux à $\pi$.

Selon une autre variante, le filtre de phase est de type polynomial.

La première caméra peut être une caméra TOF, « Time-of-Flight », ou à lumière structurée ou un système de caméras à effet stéréoscopique.

Selon une variante de réalisation, la deuxième caméra haute résolution comporte un filtre spectral adapté à rejeter ou à atténuer les longueurs d'ondes inférieures à 680nm.

Selon un autre mode de réalisation, la deuxième caméra haute résolution comporte un filtre polariseur permettant l'amélioration de la discrimination des textures de l'iris.

La distance de capture est, par exemple, choisie dans un intervalle englobant les distances variant de 30cm à 80cm. Selon une autre variante de réalisation, la distance de capture est comprise dans une plage incluse dans l'intervalle entre 2m et 15m.

L'invention concerne aussi un procédé pour acquérir des données biométriques du ou des iris d'un individu se trouvant à une distance de capture comprise dans une plage de distances appartenant à un ensemble de plages de distances prédéfinies, le procédé étant exécuté dans un système selon l'invention, au moyen d'une première caméra adaptée à déterminer la position 3D de l'œil de l'individu et une deuxième caméra haute résolution comportant au moins une lentille active adaptée à réaliser une focalisation et un balayage en focalisation dans une plage de focus donnée autour de la valeur de focalisation, caractérisé en ce qu'il comporte au moins les étapes suivantes :

- Acquérir des images en continu de l'œil de l'individu et localiser une position 3D de l'œil de l'individu,
- A partir de cette position 3D de l'œil, déterminer une première valeur d'orientation C1 pour positionner au moins la deuxième caméra haute résolution afin de capter au mieux l'œil de l'individu, une deuxième valeur de consigne C2 pour positionner la focale de la lentille active de la deuxième caméra et choisir la longueur de la plage de focalisation sur laquelle exercer les oscillations ou le balayage permanents et le pas des oscillations.

Selon une mise en oeuvre du procédé, une troisième valeur d'information de distance de capture, ainsi que les images du flux vidéo sont transmis à un module de traitement des données biométriques iris et en ce que l'on traite les images du flux vidéo reçu par la deuxième caméra haute résolution sont traitées en appliquant un post-traitement tenant compte de la valeur C3 d'information de la distance de capture, afin de recouvrer la qualité image obtenue par le système optique.

Selon une autre mise en oeuvre du procédé, on utilise en complément de ceci un filtre de phase afin d'augmenter la profondeur de champ de la deuxième caméra.

Pour l'acquisition d'images de l'iris, on applique un filtre de déconvolution, on calcule une série de noyaux de déconvolution pour un nombre fini de distances définies à l'intérieur du volume de capture.

Le procédé peut comprendre une étape de reconnaissance d'iris en considérant une image sélectionnée comme étant la meilleure image.

D'autres caractéristiques et avantages de la présente invention apparaîtront mieux à la lecture de la description qui suit donnée à titre illustratif et nullement limitatif, annexée des figures qui représentent :

- La figure 1, un schéma représentant un système d'acquisition des données iris selon l'invention,
- La figure 2, un schéma de la disposition du système, du volume de capture et d'un individu en cours,
- La figure 3, un exemple d'architecture fonctionnelle d'un système selon une variante de l'invention.

Les exemples détaillés qui vont suivre ne sont pas exhaustifs et sont donnés uniquement à titre illustratif et nullement limitatif.

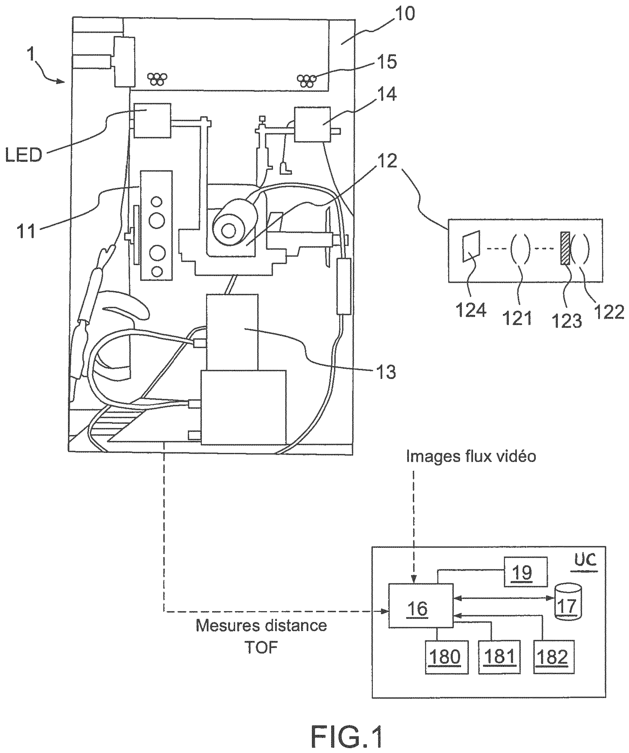

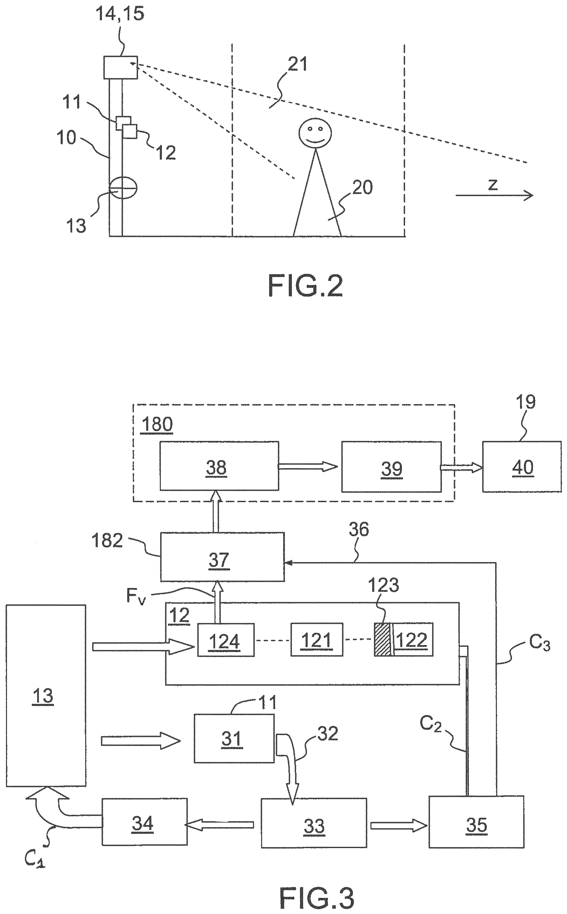

La figure 1 représente un exemple de système permettant d'acquérir des données de l'iris d'un individu. Le système 1 comprend un bâti 10 sur lequel on vient positionner une première caméra 11 adaptée à déterminer une position 3D, $P_{3D}$, de l'œil, une deuxième caméra haute résolution, 12, un moyen, 13, permettant d'asservir en position ou en vitesse la ou les caméras, au moins la deuxième caméra haute résolution, tel qu'une tourelle pan-tilt rapide et précise en angle, connue de l'homme du métier, des moyens d'éclairage de l'individu, 14, 15 disposés au niveau du bâti 10 pour assurer un bon éclairage dans le volume de capture lors de l'acquisition des données de l'iris, une unité centrale UC comportant par exemple un processeur 16 adapté à traiter les différentes données acquises lors de la prise d'iris, une ou plusieurs bases de données 17, un ou plusieurs logiciels de traitement d'image 180 pour la détection et la localisation de l'iris, un logiciel d'asservissement 181 de la pan-tilt 13 et de la lentille active 121 (figure 3), un logiciel 182 pour l'application du filtre numérique. L'unité centrale UC pilote l'ensemble des éléments formant le système, la position d'une ou des caméras, la tourelle pan-tilt. Le système peut aussi comporter un module de reconnaissance d'iris 19prenant en compte des données biométriques iris acquises. Ce module 19 comporte des algorithmes de traitement connus de l'homme du métier et qui ne seront pas détaillés dans le cadre de la présente invention.

La première caméra 11 peut être fixe et dans ce cas seule la deuxième caméra haute résolution 12 est asservie en position.

Pour la première caméra 11 il est possible d'utiliser, par exemple, une caméra Time-of-Flight ou TOF ou à lumière structurée ou un système de caméras à effet stéréoscopique. La figure 2 illustre le positionnement du système par rapport à un individu 20 dont on souhaite contrôler l'identité, alors qu'il se déplace vers le système d'acquisition des données biométriques iris lorsqu'il se trouve dans le volume de capture 21.Lorsqu'un individu entre dans le champ de vue du système d'acquisition des données biométriques de l'iris, la caméra TOF va déterminer la position 3D de l'œil de l'individu.

La deuxième caméra haute résolution comporte au moins une lentille active adaptée à effectuer une focalisation $f_0$ du système optique et des oscillations ou balayage permanents de focalisation $f_0$. La valeur de $f_0$ ainsi la longueur de la plage et le pas des oscillations permanentes dans cette plage sont asservis en fonction de valeurs comme il sera décrit plus loin dans la description.

La hauteur de positionnement des caméras sur le bâti ou le support sur lequel elles sont disposées se fera, par exemple, en fonction d'une hauteur moyenne des individus, une hauteur standard, ainsi que leur position angulaire.

Dans l'exemple donné, la pan-tilt permet notamment d'orienter le capteur de la caméra TOF, la caméra haute résolution HD, avec les optiques, la lentille active, le filtre de phase ainsi que les LEDs d'éclairage.

Les moyens d'éclairage sont par exemple des LEDs émettant de préférence dans le proche infrarouge dont les caractéristiques et la position sont choisies afin d'optimiser la prise de vue d'un individu dans un volume de capture donné par le contexte d'utilisation et en mettant en oeuvre les moyens nécessaires pour respecter la norme de sécurité de protection des yeux. Le système d'éclairage à LED peut travailler dans une ou plusieurs longueurs d'onde, ces dernières pouvant être ou non multiplexées et émettre en mode continu ou par train d'impulsions. Le système d'éclairage peut être solidaire de la caméra TOF, de la caméra haute résolution et du système pan-tilt afin de diriger l'illumination dans la direction de l'iris à acquérir et d'optimiser le flux lumineux par rapport aux normes d'éclairement.

La caméra TOF a notamment pour fonction d'analyser le flux vidéo afin de positionner l'iris dans l'espace. Elle permet d'obtenir une image RGB classique de la scène, endroit où se trouve l'individu dont on cherche à acquérir les données biométriques de l'iris, mais également une carte de profondeur des différents points de la scène. La caméra comporte un capteur RGB et un capteur de profondeur. Une transformation connue de l'homme du métier permet de replacer l'image RGB sur l'image de profondeur. La localisation 3D de l'œil de l'individu se fait en temps réel par détection des yeux sur l'image RGB et recalage sur l'image de profondeur. La fusion des données angulaires, pixel RGB, profondeur, caméra profondeur, permet d'obtenir une localisation 3D complète de l'œil. Ces traitements sont réalisés au niveau de la caméra TOF. La caméra TOF sera par exemple positionnée au voisinage de la caméra haute résolution HD afin d'assurer un système compact. Sans sortir du cadre de l'invention, on peut prendre en compte une image en niveaux de gris et travailler dans ce domaine de niveaux de gris.

La deuxième caméra, caméra haute résolution HD, est par exemple asservie en position ou en vitesse sur l'orientation de l'œil. La caméra HD est par exemple constituée d'un capteur CMOS d'acquisition 124 d'images vidéo, d'une lentille active 121 (figure 3) adaptée à réaliser un balayage ou des oscillations en focalisation sur une plage de focus autour du focus, pour permettre des acquisitions en temps réel, c'est-à-dire très rapide. La lentille active 121 est par exemple adaptée à effectuer une focalisation $f_0$ du système optique et des oscillations ou balayage permanents de la focalisation dans une plage autour de cette valeur de focalisation $f_0$, la valeur de $f_0$ ainsi que la longueur de la plage et le pas des oscillations permanentes dans cette plage sont asservies en fonction d'une deuxième valeur C2 déterminée à partir de la distance de l'œil par rapport à la deuxième caméra, selon un mode supplémentaire et optionnel, lié aux revendications 2-3, 9-10, 18-20, et détaillé plus loin. Une troisième valeur C3 d'information distance de capture $d_{cap}$ est transmise à un module de traitement des données biométriques iris.

Les lentilles actives peuvent être des lentilles liquides, à polymères, fluidiques ou déformables.

La lentille active est associée à une lentille à focale fixe (ou ensemble de lentilles à focale fixe), dite « offset » 122 de façon à pouvoir imager l'iris dans le volume de capture désiré (21 figure 2) et particulièrement dans une gamme de distance de capture $d_{cap}$ tout en conservant une résolution suffisante au niveau de l'image de l'iris pour faire de la reconnaissance d'iris. La valeur de distance de capture $d_{cap}$ est fonction du cas d'utilisation, acquisition de l'iris dans des volumes plus ou moins contraints. Typiquement, il est nécessaire de disposer d'un minimum de pixels (160 pixels suivant la norme actuelle) quel que soit la distance de capture. La caméra peut aussi comporter un filtre par exemple de type « miroir froid », qui coupe les longueurs d'onde en dessous de 680nm environ pour s'affranchir des réflexions visibles parasites et d'un système de contrôle de la polarisation comme un filtre polarisant, permettant d'améliorer la discrimination des textures de l'iris (ces éléments ne sont pas représentés sur les figures pour des raisons de simplification).

La surface optique active du système peut-être une lentille active dont le rayon de courbure est piloté électriquement par une interface et un logiciel de pilotage, appelé pilotage de lentille. La lentille active permettra d'ajuster la focalisation de la caméra haute résolution à la distance de l'œil. Les propriétés de la surface optique active seront pilotées notamment par une mesure de distance peu précise de l'œil à imager. On entend par distance peu précise, le fait que l'intervalle d'incertitude soit très supérieur à la profondeur de champ du système optique utilisé, typiquement supérieur ou égal à 3 à 5 fois. L'invention consiste à focaliser le système optique de la caméra haute résolution à la distance de l'œil grâce à une valeur de consigne sur la lentille liquide choisie par exemple à partir de la distance donnée par la TOF de manière à modifier la distance de mise au point image du dispositif, et à moduler le rayon de courbure de la surface de l'optique active autour de la valeur de cette consigne de façon continue ou par pas. Ainsi on génère un balayage ou une oscillation du focus et donc un flux continu d'images. La modulation de la courbure de la lentille permet d'osciller dans le plan du détecteur et d'être moins sensible à la profondeur de champ et donc à la précision de la caméra TOF. Ces oscillations sont effectuées grâce au pilotage rapide de la lentille active effectué par exemple par le module central (UC), par le logiciel d'asservissement du focus qui pilote l'oscillation. Typiquement l'amplitude de ces oscillations dépend de la distance de l'iris mesurée par la caméra TOF qui est comprise typiquement entre 0 et +/-2cm (dans le plan objet). Le pas de ces oscillations peut être compris entre 2mm et 5mm.

La robustesse du système de l'invention par rapport aux mouvements de la personne dans le volume de capture est obtenue grâce à :

- L'asservissement de la caméra HD en position grâce un moyen de positionnement (pan-tilt)
- L'asservissement du système optique en focus grâce à l'utilisation de la lentille active qui est plus rapide qu'un système autofocus et qui permet également un volume de capture plus grand qu'avec une lentille à focale fixe
- L'acquisition d'un flux vidéo plutôt qu'une image et grâce au balayage ou aux oscillations du focus réalisées grâce à la lentille active qui permettent statistiquement d'obtenir une image nette plus rapidement. L'acquisition du flux vidéo et le balayage ou les oscillations en focus de la lentille active, permettent d'obtenir un temps d'acquisition d'une image nette plus court, ce qui se traduit par une file d'attente plus courte pour des applications d'ABC-Gate. Ils permettent également d'être plus robuste aux mouvements de l'utilisateur qu'un système standard qui acquiert une seule image et qui défloute cette image. Enfin ils permettent d'être plus robuste aux dérives thermiques potentielles de la lentille active.

En plus du mode principal correspondant à la revendication indépendante, un mode supplémentaire et optionnel, lié aux revendications 2-3, 9-10, 18-20, est maintenant décrit.

Pour encore accroître la robustesse du système de l'invention par rapport aux mouvements de la personne dans le volume de capture, le système peut comprendre un module de post-traitement du flux vidéo image acquis par la caméra haute résolution. Ce post-traitement dépend notamment de l'optique utilisée et du volume d'acquisition souhaité.

Le post-traitement est, par exemple, calculé au préalable avant toute opération liée aux méthodes de reconnaissance de l'iris, et avant toute acquisition d'image. Ceci permet une acquisition de l'iris plus rapide que si nous devions utiliser un algorithme pour calculer le post-traitement pendant l'acquisition du flux vidéo. On va sélectionner des filtres dans une base de données en fonction de différentes plages de consigne distance donnée par la caméra TOF. Le post-traitement pourra être un traitement fixe pour une valeur de consigne donnée.

Frédéric Diaz décrit une façon de calculer le filtre de Wiener dans sa thèse soutenue le 6 mai 2011 et intitulée « Système d'imagerie hybride par codage de pupille ». Il expose un algorithme de déconvolution utilisant un filtre de Wiener. La relation donnant la répartition des éclairements dans l'image I(x, y) fait intervenir l'objet O(x,y), la PSF de l'optique h(x, y), le bruit b(x, y). Elle s'écrit, au grandissement près de l'optique :

$$I\left(x, y\right) = h(x, y) * 0(x, y) + b(x, y).$$

En absence de bruit, le filtre de déconvolution est le filtre inverse.

Dans l'espace des fréquences spatiales, on a :

$$TF\left(d\left(\sigma_x, \sigma_y\right)\right) = TF\left(h^{-1}\left(\sigma_x, \sigma_y\right)\right).$$

En pratique, la prise en compte du bruit est obligatoire et l'on utilise le filtre de Wiener qui donne :

$$TF(d) = \frac{TF(h)^*}{|TF(h)|^2 + \frac{S_B}{S_O}} ,$$

où * correspond à la transposée d'une variable complexe, et l'estimation de l'objet vaut :

$$\hat{0}(x, y) = d(x, y) * I\left(x, y\right),$$

d(x, y) étant le traitement numérique appliqué à l'image.

$S_B$ et $S_O$ sont les densités spectrales du bruit et de l'objet.

Ce filtre se rapproche du filtre inverse quand le bruit est faible et tend vers 0 quand le signal est faible.

Comme il a été indiqué précédemment, dans le cadre de l'invention, la densité spectrale de l'objet utilisée est une densité spectrale générique calculée sur une base d'images d'iris. Pour l'acquisition d'images d'iris, une série de noyaux de déconvolution est calculée pour un nombre fini de plages de distances à l'intérieur du volume de capture. Par exemple, si on choisit une distance de capture variant de 30cm à 80cm, on peut définir huit noyaux, correspondant aux valeurs de plages de distances de l'objet suivantes : [30cm-32cm ; 32-37cm ; 37cm-42cm ; 42cm-47cm ; 47cm-55cm ; 55cm-65cm ; 65cm-75cm ; 75cm-80cm].

On utilise dans le système optique de la caméra haute résolution un filtre de phase. Ce filtre de phase est basé sur la technique bien connue du codage de pupille.

Un filtre de phase 123 est, par exemple, usiné sur une face de la lentille offset de la caméra HD haute résolution afin d'augmenter sa profondeur de champ. Le filtre de phase peut être un filtre de profil continu ou discontinu. Il peut être de différents types, connus de l'homme du métier, de type binaire, annulaire à plusieurs anneaux, de type polynomial, logarithmique, exponentiel ou toute autre fonction non symétrique. Le filtre de phase permettra d'augmenter la profondeur de champ de la caméra haute résolution. Il contribue donc à acquérir une image nette et exploitable encore plus rapidement qu'avec des oscillations.

D'autres filtres plus complexes tels que ceux décrits dans le brevet FR 2 977 962 du demandeur peuvent être mis en oeuvre et les géométries des masques décrites dans la littérature de l'art antérieur restent applicables à la correction des défocalisations :

- Les masques dits cubiques dont la fonction de phase $\Phi(x, y)$ dans un repère orthonormé (x, y) vaut : $\phi(x, y) = \alpha.(x^3 + y^3)$ ;
- Les masques dits CPP pour « Constant Profil Path » ;
- Les masques dont la fonction de phase est une fonction trigonométrique ;
- Les masques simplifiés annulaires composés d'anneaux concentriques, chaque anneau introduisant une phase constante et différente selon l'anneau;
- Les masques dits polynomiaux, le filtre étant référencé dans un repère (x, y), la variation de phase du filtre de phase est un polynôme en x et en y. Lorsque le masque est à symétrie radiale, la variation de phase du filtre de phase est un polynôme en r, r représentant la distance au centre du filtre ;
- Les masques asymétriques ;
- Les masques dits semi-circulaires dont la variation de phase $\Phi(x, y)$ du filtre de phase vérifie, le filtre étant référencé dans un repère (x, y) en coordonnées cartésiennes ou (r, 0) en notations polaires : $\phi(x, y, r) = \alpha.sign(x).r^\beta$ où $\phi(x, y, r) = \alpha.sign(n.\theta).r^\beta$ pour les masques dits semi-circulaires, $\alpha$ et $\beta$ étant des constantes et la fonction sign(x) valant 1 lorsque x est positif et -1 lorsque x est négatif.

Le filtre de correction peut comporter également une fonction d'amplitude, c'est-à-dire qu'il comporte, outre la fonction de phase, des zones à transmission optique variable.

Les masques binaires annulaires sont, par exemple, composés de plusieurs anneaux concentriques avec des sauts de phase égaux ou non entre eux dont le saut de phase est égal ou non à $\pi$ ou un ou des multiples de $\pi$.

Les masques polynomiaux ont une phase exprimée en radians décrite par la loi :

$$\varphi(x, y) = \alpha(x^3 + y^3) + \beta(x^2 y + xy^2) + \delta(x^5 + y^5) + \varepsilon(x^4 y + xy^4) + \gamma(x^3 y^2 + x^2 y^3) + ...$$

où $\alpha$, $\beta$, $\delta$, $\varepsilon$ et $\gamma$ sont les paramètres du masque.

De façon pratique à un matériau donné, le saut de phase est obtenu par la formule :

$$h(x, y) = \frac{\lambda_0}{2\pi.(n-1)} \varphi(x, y) \qquad .$$

Le filtre de phase peut être fabriqué par diverses méthodes comme des techniques de polissage comme la finition magnéto-rhéologique connue sous l'abréviation anglo-saxonne MRF (Magneto-Rheological Finishing) ou par usinage de microstructures, ou moulage.

Le filtre de phase utilisé dans le système d'acquisition selon l'invention est un système de phase fixe, indépendant de la position de l'objet ou de la mise au point du système optique ou encore de la consigne de focalisation du système optique. Ce filtre de phase ne nécessite pas nécessairement de symétrie de révolution et peut être réalisé sur un des dioptres de l'optique qui effectue l'image. Il est placé de préférence au voisinage d'un plan pupille. Le masque de phase sera choisi, par exemple, en tenant compte du traitement numérique par exemple de type déconvolution suivant un critère de qualité d'image. Pour le cas de la reconnaissance d'iris, pour l'optimisation conjointe du masque de phase et du post traitement détaillé ci-après, on utilise une densité spectrale générique calculée sur une base d'images d'iris. Ces simulations prennent en compte le système optique comprenant la lentille active et la lentille offset.

Le masque est associé à un post traitement. Il est optimisé conjointement avec son post traitement. Par exemple, il est tout d'abord optimisé à 30cm, sur une plage de défocalisation de +/-2cm correspondant à la précision sur la profondeur de la caméra TOF, car il s'agit de la distance à laquelle la profondeur de champ est la plus faible. Alternativement, on peut choisir de réaliser l'optimisation à une autre distance comprise dans la plage des distances de capture que la distance 30 cm. Il est aussi possible d'utiliser plusieurs valeurs de distance en leur associant une pondération. Ensuite pour chaque valeur de distance de capture dans la gamme des distances, à partir du masque optimisé fixé, le post-traitement est calculé sur une plage de défocalisation égale à +/-2cm autour de la distance donnée par la caméra TOF. Cela permet de générer, une fois pour toute, une base de noyaux dans laquelle on va sélectionner le filtre de déconvolution à appliquer en fonction de la distance donnée par la caméra TOF.

Ce post-traitement peut être variable en fonction de valeurs de consigne moyenne de focalisation de l'optique mais de manière discontinue afin de ne pas altérer la capacité à faire de la reconnaissance en temps réel. Par exemple, si on choisit une distance de capture variant de 30cm à 80cm, on peut définir la gamme des distances suivante [30cm 35cm 40cm 45cm 50cm 60cm 70cm 80cm]. Pour chacune des valeurs de distance de capture correspond un filtre numérique différent qui permet de couvrir les plages de distance suivantes : [30cm-32cm ; 32-37cm ; 37cm-42cm ; 42cm-47cm ; 47cm-55cm ; 55cm-65cm ; 65cm-75cm ; 75cm-80cm].

On peut traiter l'image obtenue avec un ensemble de plusieurs noyaux de post-traitement (3 à 5), chaque ensemble de noyaux étant fonction de la plage de mise au point. Le volume de mise au point est découpé en tranches successives de profondeur dzi variable. La taille et le nombre de plages seront définis en fonction de la variation de plage de profondeur de champs du système d'imagerie dans la profondeur z du volume considéré. De manière encore une fois à limiter le nombre d'opérations de traitement, on s'arrangera pour que l'ensemble de ces plages ne se recouvrent que très partiellement.

Les deux éléments, forme du filtre de phase et type de post-traitement sont définis par une méthode d'optimisation conjointe par rapport à un critère de qualité d'image qui dépend de l'application et des performances recherchées. Dans l'exemple de la détection de l'iris, le critère de qualité image sera complété par un autre critère qui dépendra des algorithmes de reconnaissance utilisés et des taux de reconnaissance et d'erreurs recherchés. Le post-traitement peut être du type déconvolution et par exemple dans la solution d'imagerie proposée présentera des noyaux de taille réduite (typ< 30x30) pour éviter un décalage trop important de l'image. A titre d'exemple, il s'agit d'une matrice $21 \times 21$ avec des nombres décimaux dont les valeurs varient entre -1 et 1 par exemple.

Le système comporte deux modules de traitement d'image (180 figure 1) et de contrôle de qualité selon des principes connus de l'homme du métier. En sortie de module, la meilleure image de l'iris et les informations sur la distance de capture seront transmises à un module de reconnaissance d'individu (19 figure 1) qui effectuera les traitements connus de l'homme du métier pour reconnaître l'individu.

La figure 3 illustre un enchainement d'étapes mises en oeuvre par le procédé selon le mode supplémentaire et optionnel, lié aux revendications 2-3, 9-10, 18-20 dans le cas de la présence d'un masque de phase au niveau de la lentille active.

Tout d'abord, selon le mode principal correspondant à la revendication indépendante, initialement, la caméra TOF et la caméra HD sont chacune dans une position donnée connue du module central. Un individu dont on va acquérir les données biométriques iris se déplace dans le volume d'acquisition et passe devant la caméra TOF. Dans l'exemple donné, le système acquiert des images en continu. La caméra TOF acquiert, 31, des images afin de donner une première localisation en 3D de la position de l'œil de l'individu, par exemple, l'information de distance de l'œil par rapport au plan de la caméra qui va être transmise au module central. Ces données de position de l'œil sont transmises, 32, au logiciel de traitement d'image 33 qui va déterminer en trois dimensions la position de l'œil par rapport à la caméra HD. A partir de la position en 3D de l'iris, le processeur détermine, 34, une première valeur de consigne C1 d'orientation d'au moins la deuxième caméra HD, à partir de la position 3D de l'œil par exemple et transmet cette valeur vers la pan-tilt pour positionner la caméra HD et la caméra TOF de façon à ce que l'iris soit toujours au centre du champ de la caméra, afin d'optimiser l'acquisition des données biométriques iris. La première caméra 11 est asservie en position au moyen de la première valeur de consigne C1. Dans l'exemple donné, le système pan-tilt est aussi utilisé pour positionner la caméra TOF. La détermination de cette première valeur se fera selon une approche connue de l'homme du métier. Le processeur 35 détermine une deuxième valeur de consigne C2 pour positionner la focale de la lentille active 121 et choisir la plage de focalisation sur laquelle exercer les oscillations permanentes (focalisation de la lentille à peu près dans cette position) ou le balayage permanent en utilisant par exemple une table contenant la valeur de la focale de la lentille en fonction de la distance déterminée par la TOF, cette deuxième valeur est transmise à la lentille active. La deuxième valeur de consigne C2 est déterminée à partir de la distance de l'œil par rapport à la deuxième caméra.

Selon le mode supplémentaire et optionnel, lié aux revendications 2-3, 9-10, 18-20, le processeur 35 détermine une troisième valeur C3 correspondant à une information de distance de capture$_{cap}$. La troisième valeur d'information C3, distance de capture $d_{cap}$, peut être transmise au module de post-traitement du flux vidéo où un logiciel de flux d'images (module 182) est utilisé pour sélectionner par exemple, dans une base de données de noyaux préalablement calculés, un noyau de déconvolution en fonction de la distance de l'œil et appliquer au flux d'images un traitement de déconvolution avec ledit noyau, afin de traiter le flux d'images capté par la deuxième caméra vidéo, avant transmission du flux d'images résultant à un module de traitement des données biométriques iris. Le post-traitement tenant compte de la valeur C3 permet de recouvrer la qualité image obtenue par le système optique.

Ces trois valeurs C1, C2, C3 permettent d'optimiser le positionnement des caméras, la focale de la lentille active pour optimiser l'acquisition des données biométriques d'iris et le traitement des données.

L'information de distance est transmise à une étape de post-traitement 37 du flux vidéo issu de la caméra haute résolution. Le procédé applique un post-traitement choisi en fonction de l'information de distance, parmi une base de noyaux de déconvolution calculés au préalable de toute acquisition. En présence du masque de phase, la base des noyaux de déconvolution est calculée en même temps que la conception du masque optique. Cette conception a lieu en amont de l'utilisation du système et basée sur une optimisation conjointe entre le masque de phase et le noyau de déconvolution, prenant en compte de système optique choisi (comprenant au moins la lentille active, avec ou non une lentille offset) et les caractéristiques du détecteur (taille pixels, bruit détecteur ...). Préférentiellement, le masque et le post-traitement sont optimisés à la distance où la profondeur de champ est le plus petite. Dans une autre variante, ils peuvent être optimisés toujours conjointement à différentes distances dans la gamme de profondeur du volume de capture. Les optimisations sont effectuées selon un premier critère de qualité image QI, comme décrit dans la thèse de Frédéric Diaz. Ce critère est appelé RSB dans cette thèse, et indique la similarité entre la scène observée et l'image résultante grâce à la formule. Ici, nous appellerons ce critère QI :

$$QI = \frac{\langle O^2 \rangle}{EQM_{\max}},$$

où $EQM_{\max}$ est l'erreur quadratique moyenne maximale définie sur la plage de défocalisation $[\psi_{\min}; \psi_{\max}]$ par :

$$EQM_{\max} = \max_{\psi \in [\psi_{\min}; \psi_{\max}]} \left( \left\langle \left( O - \hat{O}_{\psi} \right)^2 \right\rangle \right),$$

$\hat{O}_{\psi}$ étant l'estimation de la scène $O$ pour la défocalisation $\psi$.

Plusieurs couples (masque + post-traitement) sont sélectionnés à partir de ce premier critère de qualité image. Ensuite, on applique un deuxième critère qui est basé sur l'analyse du taux de faux rejets (FRR en anglais False Rejection Rate) en fonction du taux de fausses acceptations (FAR False Acceptation Rate) calculé sur une base constituée d'environ 2000 images. Sur ces calculs de FRR en fonction du FAR, on prend en compte les caractéristiques du détecteur, l'optique (comprenant au moins la lentille active), les différents couples (masque de phase et le post-traitement) optimisés dans une première phase selon le critère QI. Ces courbes sont calculées à différentes distances autour du focus et on sélectionne le couple permettant d'offrir les meilleures performances FRR en fonction de FAR, c'est-à-dire les taux FRR les plus faibles à FAR fixé. Ces calculs peuvent être également effectués pour différents focus correspondant à différentes valeurs de distances de capture. Une fois la forme et la géométrie du masque choisis, pour chaque distance de l'iris, on calcule le post-traitement (de la manière décrite précédemment) de façon à constituer la base de données des post-traitements.

Un exemple de réalisation du codage de pupille pour acquérir l'iris à une distance de capture comprise entre 30cm et 80cm est présenté ci-après.

Tout d'abord, selon le mode principal correspondant à la revendication indépendante, le système de localisation 3D est une caméra de type TOF. Le système d'orientation est un système pan-tilt.

La caméra haute résolution est une caméra CMOS, comprenant 2592 x 1944 pixels de taille de pixels de 2.2μm.

La focale de la lentille offset fixe est d'environ 36mm. La lentille active est une lentille liquide dont la focale varie entre environ 110 mm et 160 mm, ce qui résulte en une focale globale du système optique comprise entre 27mm et 31mm environ. Ceci permet de focaliser l'image sur le détecteur de la caméra HD quel que soit la distance de l'objet dans le volume de capture et plus particulièrement quel que soit la distance de capture.

La focalisation de la lentille active est effectuée par le logiciel d'asservissement du focus. Le logiciel va envoyer une commande à la lentille active permettant de focaliser sur l'œil et donc de faire une image plus nette de l'œil sur le détecteur (caméra HD). Il est possible aussi de provoquer des oscillations permanentes, c'est-à-dire de faire osciller la focalisation de la lentille pour imager l'œil dans différents plans autour du plan détecteur de façon à tenir compte de la faible précision de mesure de la TOF qui est supérieure à la profondeur de champ du système optique à 30cm. Un balayage peut également être utilisé à la place des oscillations. Ceci permet d'augmenter la probabilité d'obtenir plus rapidement une image nette exploitable pour la reconnaissance de l'iris. Les oscillations ne permettent pas une amélioration de la profondeur de champ, mais représentent un moyen d'augmenter les chances d'obtenir une image exploitable par le système, malgré la précision de la TOF. L'avantage apporté par cette solution est que ce moyen permet de contourner partiellement le problème de la profondeur de champ, en regard de la précision de la TOF et d'augmenter la rapidité de l'acquisition d'une image nette exploitable pour la reconnaissance d'iris, cette rapidité étant de plus obtenue par l'acquisition d'un flux continu plutôt que d'une image.

Selon le mode supplémentaire et optionnel, lié aux revendications 2-3, 9-10, 18-20, pour améliorer la vitesse du système de capture, les oscillations peuvent être combinées au codage de pupille. Le codage de pupille a notamment pour avantage d'augmenter la profondeur de champ et donc de s'affranchir du problème de la précision de la TOF. Il est notamment très utile lorsque le volume de capture recherché implique des distances de capture courtes telles de 30cm qui induisent une profondeur de champ plus réduite. Le masque de phase est un masque polynomial à 5 paramètres dont l'amplitude maximale en hauteur est de l'ordre de +/-10μm.

Des aspects optionnels sont décrits ci-dessous ainsi que des effets du mode principal.

Le noyau a pour taille 21 × 21.

On utilise un filtre spectral qui réfléchit les longueurs d'onde en dessous de 680nm.

La qualité du flux d'images acquises est suffisamment bonne pour que les informations discriminantes de l'iris puissent en être extraites et être utilisées pour faire de la reconnaissance des personnes.

En ajustant le système optique, il est possible d'adresser des distances de capture plus grandes. Par exemple des distances comprises dans l'intervalle 2m à 15m. Par exemple en considérant une caméra haute résolution d'environ 3000 pixels, et des pixels de $1\mu$m, typiquement avec une focale globale f du système optique d'environ 200mm, et ouvert à f/2, un tel système est compatible de dispositifs de reconnaissance d'iris pour une distance de capture de 14m.

L'étape suivante 38 consiste, par exemple, à appliquer un logiciel de traitement d'image, segmenter l'iris avant de transmettre l'image iris à une étape 39de contrôle qualité et de sélection de la meilleure image iris retenue pour un individu. L'image retenue est ensuite soumise à une étape de reconnaissance d'iris 40 utilisant un logiciel de reconnaissance iris connu de l'homme du métier. Selon une autre variante, l'étape de segmentation d'iris peut être réalisée après l'étape de contrôle de qualité image.

Selon le mode principal correspondant à la revendication indépendante, le système selon l'invention peut comporter plusieurs caméras TOFs et/ou plusieurs caméras pour élargir le champ de détection et d'acquisition d'iris, et/ou acquérir les deux yeux de l'individu simultanément.

Le système selon l'invention permet d'améliorer le taux de reconnaissance car il traite pour une même personne une base importante de données au sein de laquelle on peut sélectionner les informations qui seront les plus pertinentes pour effectuer la reconnaissance d'iris. Plus précisément, le système d'acquisition des iris renvoie un flux vidéo d'images d'iris. Ces images sont comparées contre une image de référence stockée en base et associée à l'identité clamée par la personne. Le résultat de chaque comparaison (une image du flux) vs (l'image de référence) est un score de similarité. On retiendra le score le plus élevée pour décider si la personne est bien qui elle prétend être. On peut également utiliser le dispositif pour extraire une unique image de l'iris de « suffisamment bonne qualité ». Dans ce cas, on applique une métrique d'évaluation de la qualité d'image d'iris sur chaque image du flux vidéo renvoyée par le dispositif et on sélectionne la première image du flux qui a une note de qualité supérieure à un seuil qu'on a fixé préalablement.

Le système et procédé selon l'invention permettent une acquisition d'iris sans utiliser d'éléments coûteux, tels que des miroirs déformables du système optique en fonction de sa distance de mise au point ou système de mesure des aberrations du système d'imagerie en fonction de la position de l'iris. L'acquisition est rapide grâce à la vitesse de rotation de la tourelle et à l'utilisation d'une lentille active plutôt qu'un système autofocus mécanique et au système de localisation 3D. Elle est robuste aux légers mouvements de l'utilisateur grâce notamment aux oscillations ou au balayage permanents en focus (ou, selon le mode supplémentaire et optionnel, grâce à l'utilisation d'un filtre de phase optique) qui augmentent la zone de netteté de l'image et l'acquisition d'un flux continu d'images. Par rapport à d'autres systèmes de restauration d'image utilisés dans le commerce pour des applications photos, le dispositif permet d'accéder à des profondeurs de champs plus importants car il empêche l'annulation de la FTM et permet ainsi de restaurer l'image au-delà de ce que font ces dispositifs.

**Revendications**

1. - Système (1) d'acquisition de données biométriques du ou des iris d'un individu se trouvant à une distance de capture $d_{cap}$ (21)comprise dans une plage de distances de capture appartenant à un ensemble de plages de distances prédéfinies, comportant au moins une première caméra (11) adaptée à acquérir en continu un flux d'images et à déterminer la position 3D de l'œil de l'individu, au moins une deuxième caméra haute résolution (12), un moyen de positionnement (13) d'au moins une caméra, une unité centrale UC adaptée à piloter les caméras et le moyen de positionnement :

   • Au moins la deuxième caméra haute résolution (12) est asservie en fonction d'une première valeur de consigne C1 en position, la valeur C1 étant déterminée à partir de la position 3D de l'oeil,
   • La deuxième caméra haute résolution (12) comporte au moins une lentille active (121), adaptée à effectuer une focalisation $f_0$ du système optique la valeur de $f_0$ est asservie en fonction d'une deuxième valeur C2 déterminée à partir de la distance de l'œil par rapport à la deuxième caméra, **caractérisé en ce que** la lentille active (121) est adaptée à effectuer des oscillations ou balayage permanents de la focalisation dans une plage autour de cette valeur de focalisation $f_0$, la longueur de la plage et le pas des oscillations permanentes dans cette plage sont asservies en fonction de cette deuxième valeur C2 .

2. - Système d'acquisition selon la revendication 1 **caractérisé en ce qu'**une troisième valeur C3 d'information distance de capture $d_{cap}$ est transmise à un module de traitement des données biométriques iris, ladite troisième valeur C3 d'information distance de capture $d_{cap}$ est transmise à un logiciel adapté à appliquer un filtre numérique(182) afin de traiter le flux d'images capté par la deuxième caméra vidéo haute résolution (12), ledit traitement étant adapté à sélectionner dans une base de données de noyaux préalablement calculés, un noyau de déconvolution en fonction de la distance de l'œil et appliquant au flux d'images capturées un traitement de déconvolution avec ledit noyau, avant transmission de l'image résultante à un module de traitement des données biométriques iris.

**3.** - Système d'acquisition selon la revendication 2 **caractérisé en ce que** la deuxième caméra haute résolution comporte au moins un filtre de phase (123) adapté à augmenter la profondeur de champ de la deuxième caméra.

**4.** - Système d'acquisition selon l'une des revendications 1 à 3 **caractérisé en ce qu'**il comporte un module (182) adapté à traiter le flux d'images vidéo issu de la caméra haute résolution et à le transmettre à un module de reconnaissance d'iris (19) qui détermine la meilleure image d'iris.

**5.** - Système d'acquisition selon l'une des revendications 1 à 4 **caractérisé en ce que** la première caméra (11) est asservie en position au moyen de la première valeur de consigne C1.

**6.** - Système d'acquisition selon l'une des revendications 1 à 5 **caractérisé en ce qu'**il comporte des moyens d'éclairage (14, 15) de l'individu composés de plusieurs LEDs à une ou plusieurs longueurs d'onde.

**7.** - Système d'acquisition selon la revendication 6 **caractérisé en ce qu'**il comporte des moyens d'éclairages adaptés à émettre dans le proche infrarouge.

**8.** - Système d'acquisition selon l'une des revendications 1 à 7 **caractérisé en ce que** les moyens de positionnement (13) sont un système d'orientation de la direction de prise de vue de type pan-tilt.

**9.** - Système selon la revendication 3 **caractérisé en ce que** le filtre de phase (123) est un masque binaire annulaire, avec des sauts de phase égaux à des multiples de $\pi$ ou à $\pi$.

**10.** - Système selon la revendication 3 **caractérisé en ce que** le filtre de phase (123) est de type polynomial.

**11.** - Système selon l'une des revendications précédentes **caractérisé en ce que** la première caméra (11) est une caméra « Time-of-Flight » ou à lumière structurée ou un système de caméras à effet stéréoscopique.

**12.** - Système selon l'une des revendications précédentes **caractérisé en ce que** la caméra haute résolution comporte un filtre spectral adapté à rejeter ou à atténuer les longueurs d'ondes inférieures à 680nm.

**13.** - Système selon l'une des revendications précédentes **caractérisé en ce que** la caméra haute résolution comporte un filtre polariseur permettant l'amélioration de la discrimination des textures de l'iris.

**14.** - Système selon l'une des revendications précédentes **caractérisé en ce que** la distance de capture est choisie dans un intervalle englobant les distances variant de 30cm à 80cm.

**15.** - Système selon l'une des revendications précédentes **caractérisé en ce que** la distance de capture est comprise dans une plage incluse dans l'intervalle entre 2m et 15m.

**16.** - Procédé pour acquérir des données biométriques du ou des iris d'un individu se trouvant à une distance de capture comprise dans une plage de distances appartenant à un ensemble de plages de distances prédéfinies, le procédé est exécuté dans un système selon l'une des revendications 1 à 15 au moyen d'une première caméra (11) adaptée à déterminer la position 3D de l'œil de l'individu et une deuxième caméra haute résolution (12) comportant au moins une lentille active (121) adaptée à réaliser une focalisation et un balayage en focalisation dans une plage de focus donnée autour de la valeur de focalisation, **caractérisé en ce qu'**il comporte au moins les étapes suivantes :

• Acquérir des images en continu de l'œil de l'individu et localiser une position 3D de l'œil de l'individu,
• A partir de cette position 3D de l'œil, déterminer une première valeur d'orientation C1 pour positionner au moins la deuxième caméra haute résolution afin de capter au mieux l'œil de l'individu, une deuxième valeur de consigne C2 pour positionner la focale de la lentille active de la deuxième caméra et choisir la longueur de la plage de focalisation sur laquelle exercer les oscillations ou le balayage permanents et le pas des oscillations.

**17.** - Procédé selon la revendication 16 **caractérisé en ce qu'**une troisième valeur d'information de distance de capture, ainsi que les images du flux vidéo sont transmis à un module de traitement des données biométriques iris et **en ce que** l'on traite les images du flux vidéo reçu par la deuxième caméra haute résolution (12) en appliquant un post-traitement tenant compte de la valeur C3 d'information de la distance de capture, afin de recouvrer la qualité image obtenue par le système optique.

**18.** - Procédé selon la revendication 17 **caractérisé en ce que** l'on utilise un filtre de phase (123) afin d'augmenter la profondeur de champ de la deuxième caméra haute résolution.

**19.** - Procédé selon l'une des revendications 16 à 18 **caractérisé en ce que** pour l'acquisition d'images de l'iris, on applique un filtre de déconvolution, on calcule une série de noyaux de déconvolution pour un nombre fini de distances définies à l'intérieur du volume de capture.

**20.** - Procédé selon l'une des revendications 16 à 19 **caractérisé en ce que** l'on exécute une étape de reconnaissance d'iris en considérant une image sélectionnée comme étant la meilleure image.

**Patentansprüche**

**1.** System (1) zur Erfassung biometrischer Daten der Iris einer Person, die sich in einer Erfassungsdistanz $d_{cap}$ (21) befindet, die in einem Bereich von Erfassungsdistanzen liegt, der zu einem Satz von vordefinierten Distanzbereichen gehört, das mindestens eine erste Kamera (11), die zum kontinuierlichen Erfassen eines Bildstroms und zum Bestimmen der 3D-Position des Auges der Person ausgelegt ist, mindestens eine zweite hochauflösende Kamera (12), ein Mittel zum Positionieren (13) mindestens einer Kamera, eine zum Steuern der Kameras und des Positionierungsmittels ausgelegte Zentraleinheit UC umfasst:

• wobei mindestens die zweite hochauflösende Kamera (12) in Abhängigkeit von einem ersten Sollwert C1 positionsgeregelt wird, wobei der Wert C1 auf der Basis der 3D-Position des Auges bestimmt wird,
• wobei die zweite hochauflösende Kamera (12) mindestens eine aktive Linse (121) aufweist, die zum Bewirken einer Fokussierung $f_0$ des optischen Systems ausgelegt ist, wobei der Wert $f_0$ in Abhängigkeit von einem zweiten Wert C2 geregelt wird, der auf der Basis der Distanz des Auges in Bezug auf die zweite Kamera bestimmt wird, **dadurch gekennzeichnet, dass** die aktive Linse (121) zum Durchführen permanenter Oszillationen oder Abtastungen des Fokus in einem Bereich um diesen Fokuswert $f_0$ ausgelegt ist, wobei die Länge des Bereichs und die Schrittweite der permanenten Oszillationen in diesem Bereich in Abhängigkeit von diesem zweiten Wert C2 geregelt werden.

**2.** Erfassungssystem nach Anspruch 1, **dadurch gekennzeichnet, dass** ein dritter Wert C3 der Erfassungsdistanzinformation $d_{cap}$ zu einem Modul zur Verarbeitung der biometrischen Irisdaten übertragen wird, wobei der dritte Wert C3 der Erfassungsdistanzinformation $d_{cap}$ zu einer Software übertragen wird, die zum Anwenden eines digitalen Filters (182) ausgelegt ist, um den von der zweiten hochauflösenden Videokamera (12) erfassten Bildstrom zu verarbeiten, wobei die Verarbeitung zum Auswählen eines Entfaltungskerns in Abhängigkeit von der Distanz zum Auge aus einer Datenbank mit vorberechneten Kernen und zum Anwenden einer Entfaltungsverarbeitung mit dem Kern auf den erfassten Bildstrom ausgelegt ist, bevor das resultierende Bild zu einem Modul zur Verarbeitung der biometrischen Irisdaten übertragen wird.

**3.** Erfassungssystem nach Anspruch 2, **dadurch gekennzeichnet, dass** die zweite hochauflösende Kamera mindestens einen Phasenfilter (123) aufweist, der zum Erhöhen der Schärfentiefe der zweiten Kamera ausgelegt ist.

**4.** Erfassungssystem nach einem der Ansprüche 1 bis 3, **dadurch gekennzeichnet, dass** es ein Modul (182) aufweist, das zum Verarbeiten des von der hochauflösenden Kamera stammenden Videobildstroms und zum Übertragen desselben zu einem Iriserkennungsmodul (19) ausgelegt ist, das das beste Irisbild bestimmt.

**5.** Erfassungssystem nach einem der Ansprüche 1 bis 4, **dadurch gekennzeichnet, dass** die erste Kamera (11) mittels des ersten Sollwerts C1 positionsgeregelt wird.

**6.** Erfassungssystem nach einem der Ansprüche 1 bis 5, **dadurch gekennzeichnet, dass** es Mittel (14, 15) zum Beleuchten der Person aufweist, die aus mehreren LEDs mit einer oder mehreren Wellenlängen bestehen.

**7.** Erfassungssystem nach Anspruch 6, **dadurch gekennzeichnet, dass** es Beleuchtungsmittel aufweist, die zum Emittieren im nahen Infrarotbereich ausgelegt sind.

**8.** Erfassungssystem nach einem der Ansprüche 1 bis 7, **dadurch gekennzeichnet, dass** die Positionierungsmittel (13) ein System zum Orientieren der Aufnahmerichtung vom Pan-Tilt-Typ sind.

9. System nach Anspruch 3, **dadurch gekennzeichnet, dass** der Phasenfilter (123) eine ringförmige binäre Maske ist, mit Phasensprüngen gleich Vielfachen von π oder gleich π.

10. System nach Anspruch 3, **dadurch gekennzeichnet, dass** der Phasenfilter (123) vom Polynomialtyp ist.

11. System nach einem der vorhergehenden Ansprüche, **dadurch gekennzeichnet, dass** die erste Kamera (11) eine "Time-of-Flight"- oder Strukturlichtkamera oder ein Kamerasystem mit stereoskopischem Effekt ist.

12. System nach einem der vorhergehenden Ansprüche, **dadurch gekennzeichnet, dass** die hochauflösende Kamera einen Spektralfilter aufweist, der zum Unterdrücken oder Dämpfen von Wellenlängen unterhalb von 680 nm ausgelegt ist.

13. System nach einem der vorhergehenden Ansprüche, **dadurch gekennzeichnet, dass** die hochauflösende Kamera einen Polarisationsfilter aufweist, der das Verbessern der Unterscheidung von Texturen der Iris ermöglicht.

14. System nach einem der vorhergehenden Ansprüche, **dadurch gekennzeichnet, dass** die Erfassungsdistanz in einem Intervall ausgewählt wird, das Distanzen zwischen 30 cm und 80 cm einschließt.

15. System nach einem der vorhergehenden Ansprüche, **dadurch gekennzeichnet, dass** die Erfassungsdistanz in einem Bereich liegt, der in dem Intervall von 2 m bis 15 m eingeschlossen ist.

16. Verfahren zum Erfassen biometrischer Daten der Iris einer Person, die sich in einer Erfassungsdistanz befindet, die in einem Bereich von Distanzen liegt, der zu einem Satz von vordefinierten Distanzbereichen gehört, wobei das Verfahren in einem System nach einem der Ansprüche 1 bis 15 mittels einer zum Bestimmen der 3D-Position des Auges der Person ausgelegten ersten Kamera (11) und einer zweiten hochauflösenden Kamera (12) ausgeführt wird, die mindestens eine aktive Linse (121) aufweist, die zur Fokussierung und Fokusabtastung in einem gegebenen Fokusbereich um den Fokuswert herum ausgelegt ist, **dadurch gekennzeichnet, dass** es mindestens die folgenden Schritte umfasst:

    • Erfassen von kontinuierlichen Bildern des Auges einer Person und Lokalisieren einer 3D-Position des Auges der Person,
    • Bestimmen, auf der Basis dieser 3D-Position des Auges, eines ersten Orientierungswertes C1 zum Positionieren mindestens der zweiten hochauflösenden Kamera zum bestmöglichen Erfassen des Auges der Person, eines zweiten Sollwertes C2 zum Positionieren der Brennweite der aktiven Linse der zweiten Kamera und zum Auswählen der Länge des Fokusbereichs, über den die Oszillationen oder die permanente Abtastung ausgeübt werden sollen, sowie der Schrittweite der Oszillationen.

17. Verfahren nach Anspruch 16, **dadurch gekennzeichnet, dass** ein dritter Wert von Erfassungsdistanzinformation sowie die Bilder des Videostroms zu einem Modul zur Verarbeitung biometrischer Irisdaten übertragen werden, und dadurch, dass die Bilder des von der zweiten hochauflösenden Kamera (12) empfangenen Videostroms durch Anwenden einer Nachbearbeitung unter Berücksichtigung des C3-Wertes der Erfassungsdistanzinformation verarbeitet werden, um das durch das optische System erhaltene qualitative Bild wiederherzustellen.

18. Verfahren nach Anspruch 17, **dadurch gekennzeichnet, dass** ein Phasenfilter (123) verwendet wird, um die Schärfentiefe der zweiten hochauflösenden Kamera zu erhöhen.

19. Verfahren nach einem der Ansprüche 16 bis 18, **dadurch gekennzeichnet, dass** zum Erfassen von Bildern der Iris ein Entfaltungsfilter angewendet und eine Reihe von Entfaltungskernen für eine endliche Anzahl von innerhalb des Aufnahmevolumens definierten Abständen berechnet wird.

20. Verfahren nach einem der Ansprüche 16 bis 19, **dadurch gekennzeichnet, dass** ein Iriserkennungsschritt durchgeführt wird, bei dem ein ausgewähltes Bild als das beste Bild betrachtet wird.

**Claims**

1. A system (1) for acquiring biometric data from the iris(es) of an individual located at a capturing distance $d_{cap}$ (21) comprised in a range of capturing distances which belong to a group of predefined distance ranges, comprising at least a first camera (11) which is adapted to continuously acquire a flow of images and to determine the 3D position of the eye of the individual, at least a second high-resolution camera (12), a positioning means (13) for at least one camera, a central unit UC which is adapted to control the cameras and the positioning means:

• at least the second high-resolution camera (12) is controlled as a function of a first setpoint value C1 in terms of position, the value C1 being determined from the 3D position of the eye,
• the second high-resolution camera (12) has at least one active lens (121) which is adapted to carry out a focusing $f_0$ of the optical system, the value of $f_0$ is controlled as a function of a second value C2 which is determined from the distance of the eye relative to the second camera, **characterised in that** the active lens (121) is adapted to carry out permanent oscillations or scanning of the focusing in a range around this focusing value $f_0$, the length of the range and the pitch of the permanent oscillations in this range are controlled as a function of this second value C2.

2. The acquisition system according to claim 1, **characterised in that** a third value C3 of capturing distance information $d_{cap}$ is transmitted to a processing module for the biometric iris data, the third value C3 of capturing distance information $d_{cap}$ is transmitted to a software which is adapted to apply a digital filter (182) in order to process the flow of images captured by the second high-resolution video camera (12), the processing being capable of selecting from a database of kernels which have been previously calculated, a deconvolution kernel as a function of the distance of the eye and applying to the flow of images captured a deconvolution processing with the kernel, before transmitting the resulting image to a module for processing the biometric iris data.

3. The acquisition system according to claim 2, **characterised in that** the second high-resolution camera has at least one phase filter (123) which is adapted to increase the field depth of the second camera.

4. The acquisition system according to any one of claims 1 to 3, **characterised in that** it has a module (182) which is adapted to process the flow of video images originating from the high-resolution camera and to transmit it to an iris recognition module (19) which determines the best iris image.

5. The acquisition system according to any one of claims 1 to 4, **characterised in that** the first camera (11) is controlled in terms of position using the first setpoint value C1.

6. The acquisition system according to any one of claims 1 to 5, **characterised in that** it has means (14, 15) for illuminating the individual composed of several LEDs having one or more wavelengths.

7. The acquisition system according to claim 6, **characterised in that** it has illumination means which are adapted to transmit in near-infrared.

8. The acquisition system according to any one of claims 1 to 7, **characterised in that** the positioning means (13) are an orientation system for the exposure direction of the pan-tilt type.

9. The system according to claim 3, **characterised in that** the phase filter (123) is an annular binary mask, with phase jumps equal to multiples of $\pi$ or to $\pi$.

10. The system according to claim 3, **characterised in that** the phase filter (123) is of the polynomial type.

11. The system according to any one of the preceding claims, **characterised in that** the first camera (11) is a "Time of Flight" camera or a structured light camera or a system of cameras with stereoscopic effect.

12. The system according to any one of the preceding claims, **characterised in that** the high-resolution camera has a spectral filter which is adapted to reject or to attenuate wavelengths less than 680 nm.

13. The system according to any one of the preceding claims, **characterised in that** the high-resolution camera has a polarising filter which enables the discrimination of iris textures to be improved.

14. The system according to any one of the preceding claims, **characterised in that** the capturing distance is selected in a range which includes the distances from 30 cm to 80 cm.

15. The system according to any one of the preceding claims, **characterised in that** the capturing distance is comprised in a range which is included in the range between 2 m and 15 m.

16. A method for acquiring biometric data from the iris(es) of an individual located at a capturing distance comprised in a range of distances belonging to a set of predefined distance ranges, the method is carried out in a system according to any one of claims 1 to 15 using a first camera (11) which is adapted to determine the 3D position of the eye of the individual and a second high-resolution camera (12) which has at least one active lens (121) which is adapted to carry out a focusing and a focusing scanning in a specific focus range around the focusing value, **characterised in that** it comprises at least the following steps:

   • acquiring continuous images of the eye of the individual and locating a 3D position of the eye of the individual,
   • based on this 3D position of the eye, determining a first orientation value C1 to position at least the second high-resolution camera in order to best capture the eye of the individual, a second setpoint value C2 in order to position the focal length of the active lens of the second camera and to select the length of the focusing range to which to apply the permanent scanning or oscillations and the oscillation pitches.

17. The method according to claim 16, **characterised in that** a third value of capturing distance information and the images of the video flow are transmitted to an iris biometric data processing module and **in that** the images of the video flow received by the second high-resolution camera (12) are processed by applying a post-processing taking into account the value C3 of the capturing distance information in order to recover the image quality obtained by the optical system.

18. The method according to claim 17, **characterised in that** a phase filter (123) is used in order to increase the field depth of the second high-resolution camera.

19. The method according to any one of claims 16 to 18, **characterised in that**, in order to acquire iris images, a deconvolution filter is applied, a series of deconvolution kernels are calculated for a finite number of distances defined within the capturing volume.

20. The method according to any one of claims 16 to 19, **characterised in that** an iris recognition step is carried out considering a selected image as being the best image.

FIG.1

FIG.2

FIG.3

**RÉFÉRENCES CITÉES DANS LA DESCRIPTION**

**Documents brevets cités dans la description**

- US 8553948 B
- WO 2007081122 A
- US 8755573 B
- US 2013089240 A
- FR 2977962